Europäisches Patentamt

European Patent Office

Office européen des brevets

(19)

(11) Numéro de publication: **0 190 951**
**B1**

(12) **FASCICULE DE BREVET EUROPEEN**

(45) Date de publication du fascicule du brevet:
14.06.89

(51) Int. Cl.⁴: **H 04 L 11/16, H 04 L 1/16**

(21) Numéro de dépôt: **86400024.5**

(22) Date de dépôt: **08.01.86**

(54) Procédé d'échange de messages dans un réseau en anneau et dispositif permettant la mise en oeuvre du procédé.

(30) Priorité: **08.01.85 FR 8500201**

(43) Date de publication de la demande:
**13.08.86 Bulletin 86/33**

(45) Mention de la délivrance du brevet:
**14.06.89 Bulletin 89/24**

(84) Etats contractants désignés:
**BE DE GB IT LU NL**

(56) Documents cités:
**EP-A- 0 093 004**

**AFIPS CONFERENCE PROCEEDINGS - 1981 NATIONAL COMPUTER CONFERENCE, 4-7 mai 1981, Chicago, Illinois, pages 209-214, AFIPS Press, Arlington, Virginia, US; W.Y. CHENG et al.: "ILLINET - A 32 Mbits/sec. local-area network"**
**CONTROL ENGINEERING, vol. 28, no. 2, février 1981, pages 80-82, St. Pontiac, Illinois, US; E. JANECEK: "Packet-switching network tightens control system response"**

(73) Titulaire: **BULL S.A., 121, avenue de Malakoff, F-75764 Paris Cédex 16 (FR)**

(72) Inventeur: **Guerin, Christian, 11, allée des Passières, F-38190 Villard Bonnot (FR)**
Inventeur: **Raison, Henri, 23, boulevard Maréchal Leclerc, F-38000 Grenoble (FR)**
Inventeur: **Martin, Pascal, Villa des Jonquilles La Tuilerie, F-38410 Uriage (FR)**

(74) Mandataire: **Debay, Yves et al, BULL S.A. Industrial Property Department 25 avenue de la Grande-Armée, F-75016 Paris (FR)**

## Description

La présente invention concerne un procédé d'échange de messages dans un réseau en anneau entre une station émettrice et plusieurs stations du réseau auquel ce message est susceptible d'être adressé et le dispositif permettant la mise en œuvre du procédé.

Dans les procédés classiques d'échange de messages entre une station émettrice et plusieurs stations reliées entre elles, la station émettrice commence par émettre un message vers chacune des stations réceptrices, puis chacune des stations réceptrices après avoir reçu et enregistré le message lorsqu'elles étaient adressées envoient un signal d'acquittement vers la station émettrice et enfin la station émettrice, recevant de chacune des stations réceptrices un message d'acquittement, achève la procédure par un message de confirmation qui indique aux stations que tout s'est bien déroulé et que le message est donc à prendre en compte. Ce procédé présente l'inconvénient dans le cas de n stations de nécessiter trois n messages pour que l'échange soit effectué. Il est donc consommateur en temps et en matériel puisque pendant ce temps là les stations ne sont pas disponibles, et le réseau de communication (câble) est occupé abusivement par des messages de service.

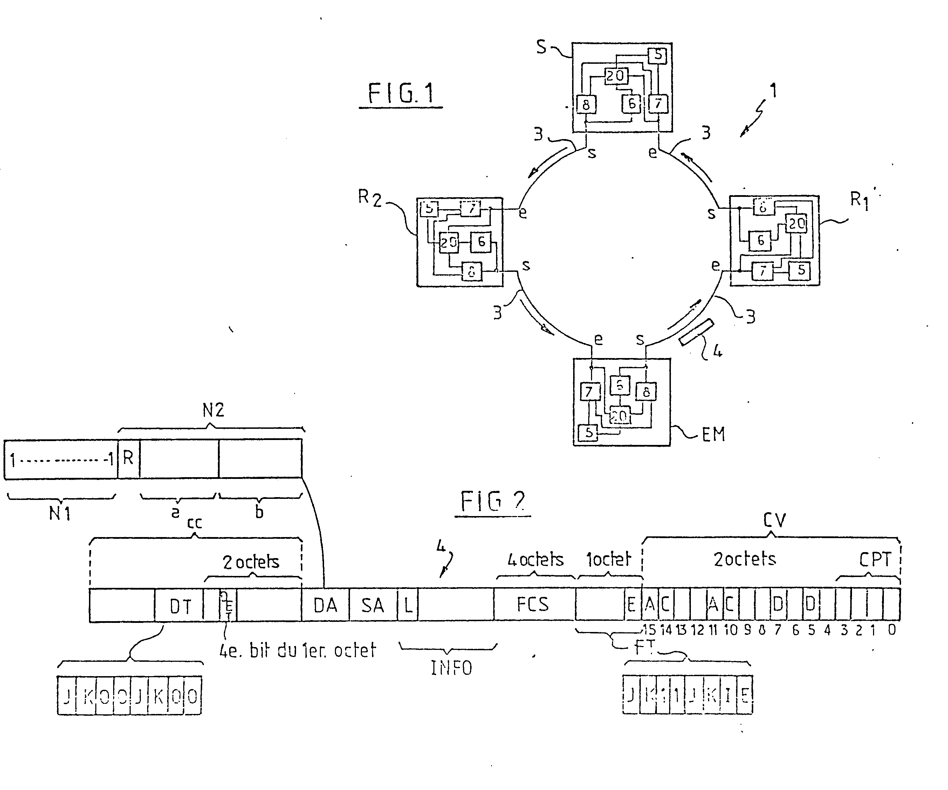

Le document AFIPS CONFERENCE PROCEEDINGS – 1981 NATIONAL COMPUTER CONFERENCE, 4–7 mai 1981, Chicago Illinois, pages 209–214, AFIPS Press, Arlington, Virginia, US; W.Y. CHENG et al.: «ILLINET – 32 Mbits/sec. local-area network» (voir page 210, colonne de droite, alinéa 2 – page 212, colonne de droite, alinéa 1 figures 1, 2, et 5) décrit un procédé d'échange de messages dans un réseau en anneau entre une station émettrice et plusieurs stations du réseau auxquelles un message contenu dans une trame est susceptible d'être adressé, le procédé comportant:

l'émission par la station émettrice d'un champ vide (ACK; RQ) contenant au départ aucune information;

la modification de l'information contenue dans ce champ vide au passage dans chaque station par modification ou recopie d'au moins un bit (ACK, RQ) indiquant que la station s'est reconnue comme adressée, modification d'au moins un bit (RQ) indiquant que toutes les stations adressées ont bien recopié le message ou qu'au moins une station adressée n'a pas recopié le message.

L'invention a pour objet un procédé d'échange de messages dans un réseau en anneau entre une station émettrice et plusieurs stations du réseau auxquelles un message contenu dans une trame est susceptible d'être adressé, le procédé comportant

l'émission par la station émettrice (EM) d'un champ vide (CV) contenant au départ aucune information et la modification d'au moins un bit (C) indiquant que toutes les stations adressées ont bien recopié le message ou qu'au moins une, station adressée n'a pas recopié le message: Le procédé selon l'invention est caractérisé en ce qu'il comporte aussi les étapes suivantes:

– modification de l'information contenue dans ce champ vide (CV) au passage dans chaque station par incrémentation dans chaque station d'un champ compteur (CPT) dont la capacité est en relation avec le nombre de stations du réseau,

– modification ou recopie d'au moins un bit (A) indiquant qu'au moins une station s'est reconnue comme adressée, ou qu'aucune station n'est reconnue comme adressée,

– émission d'un champ (FT) indiquant la fin de la trame avant le champ vide (CV),

– et modification ou recopie d'un bit (E) du champ (FT) indiquant la fin de la trame en relation avec la validité de la trame.

L'invention a aussi pour objet un dispositif de mise en œuvre du procédé selon l'invention. Un tel dispositif est caractérisé en ce que chaque station comporte:

– des moyens d'émission d'un champ vide CV;

– des moyens de réception et de stockage de l'information contenue dans un champ vide et des moyens de détection du passage du champ vide;

– des moyens de reconnaissance de l'adressage ou du non adressage de la station et de prise en compte de l'information INFO;

– des moyens de modification de l'information véhiculée par le champ vide en fonction du résultat fourni par les moyens de reconnaissance d'adressage;

– des moyens de modification d'un bit (E) du champ indiquant la fin de la trame en relation avec la validité de la trame.

D'autres caractéristiques et avantages de l'invention apparaîtront plus clairement à la lecture de la description ci-après faite en référence aux figures annexées dans lesquelles:

– la figure 1 représente un réseau de communication en anneau entre plusieurs stations, dont une transmet une trame aux autres suivant un procédé d'adressage particulier;

– la figure 2 est une représentation d'une trame comprenant le message ou une partie de ce message (paquet) transitant entre les différentes stations du réseau;

– la figure 3 est un schéma de principe des circuits permettant la mise en œuvre du procédé d'adressage entre stations;

– la figure 4 représente schématiquement les tables de mémoire utilisées dans le procédé d'adressage;

– la figure 5 représente les circuits constituant les moyens de réception et de détection du passage d'un champ vide et les moyens de stockage de l'information du champ vide permettant l'échange du message;

– la figure 6 représente les circuits constituant les moyens de modification de l'information véhiculée par le champ vide;

– la figure 7 représente les circuits constituant les moyens de lecture et de vérification de l'information contenue dans le champ vide dans la station émettrice;

– la figure 8 représente les circuits constituant les moyens d'émission du champ vide.

La figure 1 représente un réseau (1) constitué par une station émettrice (EM) dont la sortie (s) est reliée par un câble (3) à l'entrée (e) d'une première station réceptrice (R1), dont la sortie (s) est reliée par un câble (3) à l'entrée (e) d'une station non réceptrice (S) (shunt), cette station shunt (S) étant reliée par un câble (3) à l'entrée (e) d'une deuxième station réceptrice (R2) dont la sortie (s) est reliée par un câble (3) à l'entrée (e) de la station émettrice (EM). La station (EM) est considérée comme la station émettrice mais il est bien évident que chacune des stations réceptrices du réseau peut également jouer le rôle de station émettrice et que dans ce cas là, la station (EM) devient elle réceptrice. La station (EM) émet sur le câble (3) une trame (4) codée par exemple en Manchester, ou en tout autre code utilisé dans les transmissions. Cette trame véhicule sous forme codée l'information représentée à la figure 2 et constituée par un champ de contrôle (CC) incluant un début de trame (DT) suivi de deux octets dans lesquels le quatrième bit du premier octet (DET) permet d'indiquer si l'on transmet une trame ou bien si l'on envoie un jeton. Ce champ de contrôle (CC) est suivi d'un champ (DA) adresse destinataire, lui-même suivi d'un champ d'adresse source (SA) définissant l'organe émetteur. Le champ adresse source (SA) est suivi d'un champ contenant les informations transmises par la trame (paquet ou message). Ce champ (INFO) est lui-même suivi de quatre octets définissant un champ (FCS), qui par l'exploitation de ces quatre octets permet d'assurer un contrôle de cohérence de l'information transmise. Le champ (FCS), est lui-même suivi d'un octet constituant le champ (FT) fin de trame, lequel comporte un dernier bit (E) (erreur). Le champ (FT) est lui-même suivi de deux octets constituant un champ vide (CV), dans lequel par exemple, les quatre bits (0), (1), (2), (3), constituent un champ (CPT). Les bits (5) et (7) du champ (CV) représentent l'information (D), les bits (11) et (15) représentent l'information (A) et les bits (10) et (14) l'information (C). Le bit (A) a pour fonction d'indiquer qu'au moins une station a reconnu l'adresse (DA). Le bit (C) a pour fonction d'indiquer soit que toutes les stations qui devaient se reconnaître comme adressées ont bien recopié l'information, soit qu'au moins une des stations qui devait se reconnaître et recopier n'a pas pu exécuter la copie pour une raison ou pour une autre. Le bit (D) (diffusion) indique soit que toutes les stations qui devaient se reconnaître comme adressées ont une disponibilité mémoire (associée à l'adresse DA) suffisante pour la taille du message à recevoir, soit qu'une au moins des stations qui devait se reconnaître a une disponibilité mémoire insuffisante (en relation avec l'adresse DA) pour recevoir la totalité du message. Le champ (CPT) constitue un compteur du nombre des stations visitées par le message et permet de s'assurer que toutes les stations du réseau ont bien vu passer le message. Le fait que les bits (A), (C) et (D) soient doublés permet d'assurer une redondance dans les signaux véhiculés ainsi que dans le traitement des informations représentées par ces bits et par conséquent d'améliorer la sécurité de fonctionnement du procédé. Toutefois, il est bien évident que l'on pourrait concevoir un procédé ne comportant qu'un seul bit (A), un seul bit (C) et un seul bit (D). Par ailleurs pour d'autres raisons on a choisi le champ (CV) égal à deux octets, maisil est bien évident que ceci est purement indicatif et que suivant les besoins on pourra modifier la taille du champ (CV) et la taille du champ (CPT) sans pourtant sortir de cadre de l'invention. Le procédé d'échange de messages entre les différentes stations est particulièrement avantageux dans le cas où avec un seul message on peut adresser plusieurs stations. Pour ce faire le champ (DA) adresse destinataire doit comporter des informations et être associé avec des stations qui fonctionnent suivant un procédé d'adressage particulier permettant à un seul message d'être reçu par plusieurs stations à la fois et ceci de façon sélective.

Pendant le passage de la trame dans la couche physique des stations chaque station détecte le champ de contrôle (CC) et son en-tête (DT), prélève les bits constitués par le champ adresse destinataire, va regarder dans une table (21) si cette adresse est contenue dans cette table de la mémoire (213), en même temps mémoires momentanément le message constitué par l'information et dans le cas où l'adresse transportée par le message figure également dans le table, dans le cas où la trame est correcte, et dans le cas également où la mémoire est suffisante pour accueillir le message complet, chaque station valide l'entrée de l'information et modifie les bits du champ vide de la trame de façon à indiquer que la prise en compte de l'information a été effectuée.

Comme on peut le comprendre le procédé d'adressage présente l'avantage de s'affranchir de l'établissement d'une correspondance entre les adresses destinataires et les stations physiquement présentes dans le réseau. D'autre part, pour l'opérateur qui se trouve devant une station quelconque il n'est plus nécessaire de connaître la constitution du réseau et chaque station apparaît comme étant une machine présentant la capacité et les facultés offertes par l'assemblage des différentes stations du réseau. Ce procédé est donc particulièrement intéressant dans les machines à architecture répartie dans lesquelles le réseau de communication doit rester transparent pour l'opérateur. Dans chaque table de chaque station, les adresses correspondent à des objets disponibles ou pouvant être effectués par la station. Ces objets peuvent être à titre d'exemple, soit une ressource physique telle qu'une imprimante, soit une ressource logicielle telle qu'une tâche ou un fichier, soit un mécanisme tel qu'une gestion de verrou. Ces objets évoluent (création, destruction) et par conséquent la table décrivant les objets disponibles évolue aussi dans le temps. Les tables reflètent les ressources en présence. Au départ il y a initialisation du système puis on crée ou on élimine un ou plusieurs objets. Ainsi on crée un nouvel objet dans la table, par exemple, par le fait de brancher un nouveau périphérique, de charger un nouveau programme, ou de recréer la fonction compilation de la station qui vient de tomber en panne dans une autre station. De même on peut éliminer un ou plusieurs objets dans le cas où l'utilisateur n'a plus besoin d'une ou plusieurs fonctions ou ressources. Par conséquent la configuration de la table représentative de celles-ci évoluera dans le temps en fonction du travail effectué par chacune des stations.

Le procédé comprend les étapes suivantes:
la station émettrice (EM) envoie une trame constituée de façon classique par le champ (CC), le champ (DA), le champ (SA), le champ (INFO), le champ (FCS), le champ (FT) et ajoute à la suite de ce champ (FT) un champ (CV) contenant les informations que l'on a définies ci-dessus, ces informations étant initialement nulles. Lors de son arrivée dans la première station (R1) le champ (DA) va permettre à la station (R1) de déterminer qu'elle doit prendre en compte l'information contenue (INFO) et cette station (R1) va par la suite modifier au passage le contenu du champ (CV) de façon à indiquer qu'elle a bien reconnue l'adresse, qu'elle a la capacité mémoire suffisante pour accueillir le message complet, qu'elle a bien recopié la trame et que cette trame est passée dans une première station. La trame continue son chemin vers la station (S) et cette dernière dès la détection de l'arrivée du message constate par le champ (DA) qu'elle ne doit pas prendre en compte l'information et laisse passer le message en modifiant simplement le contenu du champ (CPT) de façon à indiquer que le message est passé dans une deuxième station. Le message poursuit son chemin et arrive à la station (R2) qui détermine par le champ (DA) qu'elle doit prendre en compte l'information contenue dans ce message et elle modifie en conséquence le champ (CV). Enfin le message revient à la station émettrice (EM) qui vérifie que le nombre de stations visitées correspond bien au nombre inscrit dans une mémoire (50), indiquant le nombre de stations du réseau, qu'au moins une station du réseau s'est reconnue adressée et que toutes les stations du réseau qui se sont reconnues comme adressées ont la capacité mémoire suffisante pour accueillir tout le message et ont bien copié l'information. Dans ce cas, la station émettrice constatant le bon fonctionnement de l'échange émet une autre trame ou passe un jeton à une autre station. Ce qui a pour effet de valider la trame précédente chez les récepteurs correspondants. Par contre dans le cas où la station émettrice constate qu'il y a eut une erreur soit de copie soit de transmission soit de capacité mémoire, ou que le nombre de stations ne correspond pas au nombre indiqué dans sa mémoire, la station (EM) émet une trame particulière d'annulation de la trame précédente; ainsi, une trame dans ce mode des fonctionnement est ou bien reçue correctement par tous les destinataires, ou bien reçue par aucun;

une trame mal transmise, et donc annulée, est bien sûr ré-émise par la suite. A l'arrivée dans la station (EM) les bits (A) et (C) peuvent présenter les configurations suivantes:
soit (A) est égal à 0 et (C) est égal à 0 ce qui indique qu'aucune station ne s'est reconnue comme adressée et que par conséquent aucune station n'a copié le message;
soit (A) est égal à 1 et (C) est égal à 1 ce qui indique qu'une ou plusieurs stations se sont reconnues comme adressées et ont recopié correctement le message;

soit (A) est égal à 1 et (C) est égal à 0 ce qui indique qu'au moins une station qui était adressée n'a pas recopié correctement. Pour ce faire il faut que chacune des stations adressées comporte un circuit de modification du champ (CV) qui satisfasse les trois tables de vérité suivantes:

Premier cas: en entrée de la station (A), est égal à 0 et (C) est égal à 0 ce qui voulait dire qu'aucune station précédemment ne s'était reconnue comme adressée et n'avait recopié. Par conséquent la sortie de la station doit présenter les valeurs ci-après indiquées par (A) en sortie, (C) en sortie, dans la colonne (R) dans le cas où la station ne devait pas se reconnaître, dans la colonne (R.C) dans le cas où la station devait se reconnaître et copier l'information et dans la colonne (RC) dans le cas où la station devait se reconnaître mais n'a pas copié l'information.

| $\bar{R}$ | R.C. | $R\bar{C}$ | |
|---|---|---|---|
| 0 | 1 | 1 | A en sortie |
| 0 | 1 | 0 | C en sortie |

Le deuxième cas correspond au cas où la station reçoit en entrée le bit (A) à 1 et le bit (C) à 1 ce qui veut dire qu'au moins une station en amont s'est reconnue comme adressée et qu'elle a copié correctement et qu'aucune station en amont n'a été dans l'impossibilité de recopier cette trame. Cette deuxième table présente en sortie les modifications que doit apporter la station au champ (CV) suivant les cas de figure. Ainsi dans cette table la colonne $\bar{R}$ correspond au cas de figure de la station (S) du réseau.

| $\bar{R}$ | R.C | $R\bar{C}$ | |
|---|---|---|---|
| 1 | 1 | 1 | A en sortie |
| 1 | 1 | 0 | C en sortie |

Le troisième cas correspond à l'éventualité où en entrée en reçoit l'information (A) égale à 1 et (C) égale à 0 ce qui veut dire qu'une station au moins en amont s'est reconnue comme adressée et n'a pas recopié le message pour une raison ou pour une autre.

| $\bar{R}$ | R.C | R$\bar{C}$ | |
|---|---|---|---|
| 1 | 1 | 1 | A en sortie |
| 0 | 0 | 0 | C en sortie |

Les valeurs de (A) et (D) évoluent de la façon représentée dans les trois cas correspondant aux trois tableaux ci-dessus à condition de remplacer dans les tableaux et les cas ci-dessus (C) par (D);

soit (A) est égal à 0 et (D) est égal à 0 ce qui indique qu'aucune station ne s'est reconnue comme adressée et que par conséquent aucune station n'avait la possibilité de prendre en compte le message;

soit (A) est égal à 1 et (D) est éqal à 1 ce qui indique qu'une ou plusieurs stations se sont reconnues comme adressées et avaient toutes la capacité mémoire suffisante pour accueillir intégralement le message;

soit (A) est égal à 1 et (D) est égal à 0 ce qui indique qu'au moins une station qui était adressée n'avait pas la capacité mémoire suffisante pour accueillir intégralement le message. Pour ce faire il faut que chacune des stations adressées comporte un circuit de modification du champ (CV) qui satisfasse les trois tables de vérité suivantes: Premier cas: en entrée de la station, (A) est égal à 0 et (D) est égal à 0 ce qui voulait dire qu'aucune station précédemment ne s'était reconnue comme adressée. Par conséquent la sortie de la station doit présenter les valeurs ci-après indiquées par (A) en sortie, (D) en sortie, dans la colonne ($\bar{R}$) dans le cas où la station ne devait pas se reconnaître, dans la colonne (R.D) dans le cas où la station devait se reconnaître et copier l'information et dans la colonne (R$\bar{D}$) dans le cas où la station devait se reconnaître mais n'avait pas la capacité mémoire suffisante pour prendre en compte intégralement le message.

| $\bar{R}$ | R.D | R$\bar{D}$ | |
|---|---|---|---|
| 0 | 1 | 1 | A en sortie |
| 0 | 1 | 0 | D en sortie |

Le deuxième cas correspond au cas où la station reçoit en entrée le bit (A) à 1 et le bit (D) à 1 ce qui veut dire qu'au moins une station en amont s'est reconnue comme adressée et qu'elle avait la possibilité de copier intégralement le message. Cette deuxième table représente en sortie les modifications que doit apporter la station au champ (CV) suivant les cas de figure.

| R | R.D | R$\bar{D}$ | |
|---|---|---|---|
| 1 | 1 | 1 | A en sortie |
| 1 | 1 | 0 | D en sortie |

Le troisième cas correspond à l'éventualité où en entrée on reçoit l'information (A) égale à 1 et (D) égale à 0 ce qui veut dire qu'une station qui s'est reconnue comme adressée et n'avait pas la possibilité de prendre en compte le message dans son intégralité.

| $\bar{R}$ | R.D | R$\bar{D}$ | |
|---|---|---|---|
| 1 | 1 | 1 | A en sortie |
| 0 | 0 | 0 | D en sortie |

En plus chaque station doit incrémenter de +1 le contenu du compteur (CPT). Enfin de façon connue chaque station peut mettre à (1) le bit (E) du champ (FT) ce qui indique que la trame n'était pas correcte c'est-à-dire, soit qu'elle ne contenait pas de champ (FT), soit que le champ (DT) ou (FT) ne contenait pas les signaux (J, K) attendus, soit que des signaux (J, K) étaient présents entre les champs (DT) et (FT), soit que les champs (DA), (SA), et (INFO) ne contenaient pas le minimum d'octet requis, soit qu'il n'y avait pas dans la trame un nombre entier d'octets, soit enfin que le champ (FCS) indiquait une incohérence de l'information retransmise. La réception par l'émetteur (EM) d'une trame contenant l'information (A=1; C=1; D=1 et E=0) indique que toute la transmission s'est bien passée et que l'échange de message a été correct. La réception par l'émetteur EM d'une trame contenant l'information (A=0; C=0; D=0; et E=0) indique que la transmission s'est bien passée, mais qu'aucune station n'a été adressée.

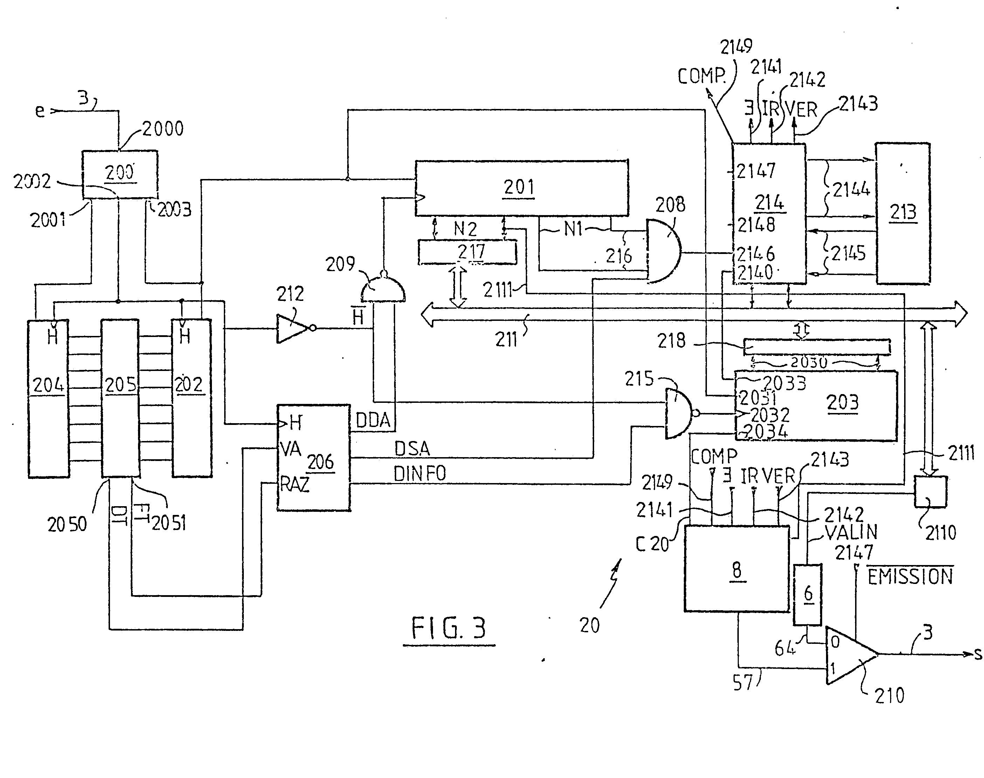

Pour mettre en œuvre ce procédé chaque station doit pouvoir relier à sa sortie (s) un circuit (6) d'émission d'un champ vide (CV) à la suite du champ (FT) de chaque trame (4) émise. Un circuit (7) de réception et de stockage de l'information contenue dans un champ vide et de détection du passage du champ vide est relié à l'entrée (e) de la station. Un circuit (20) de reconnaissance de l'adressage ou du non-adressage de la station, de vérification que le message peut être mémorisé dans la station dans son intégralité, de copiage et de traitement de la trame contenant le message (INFO) est relié à l'entrée (e) de la station, à la sortie (s) de cette station et enfin à l'entrée d'un circuit (8) de modification de l'information véhiculée par le champ vide (CV) de la trame. Ce circuit (8) est relié en sortie à la sortie (s) de la station et en entrée à la sortie du circuit (7). Enfin la sortie du circuit (7) est reliée à l'entrée d'un circuit (5) assurant, au retour de la trame, la lecture de l'information contenue dans le champ vide et la vérification de la conformité de la transmission, lui-même relié au circuit (20). Dans un but de schématisation toutes les liaisons entre les différents circuits n'ont pas été représentées mais pourront être déduites de la description qui suit faite en référence aux figures 3, 5, 6, 7, 8. Ainsi par la suite on comprend que les circuits (6) et (8) sont reliés au travers de l'élément (210) à la sortie (s) de la station. – La figure 3 représente le circuit de chaque station assurant la détection du type d'adressage la prise en compte de l'information et l'émission des signaux permettant l'acquittement au vol de la trame ceci pendant le temps de transfert de la trame entre la borne d'entrée (e) et la borne de sortie (s) de la station. Cette couche physique comprend un circuit de décodage (200) permettant d'assurer par la suite le mécanisme de reconnaissance de l'en-tête ou début de trame (DT), ainsi que la reconnaissance de fin de trame (FT). Le début de trame après décodage présente comme figuré (fig. 2) une succession de huit bits dont les deux premiers représentent une information non-donnée (J), (K), les deux suivants les données (0), les deux suivants les non-données (J), (K), et les deux suivants les données (0). Le circuit (200), placé après un décodeur Manchester (non représenté), extrait des signaux reçus sur l'entrée (2000), un signal d'horloge (H), un signal (DONNEE) et un signal (VAL) (valeur de la donnée ou de la non-donnée). Ces signaux sont délivrés respectivement sur les sorties (2002), (2001), (2003) et répondent à la table de vérité ci-dessous.

| Donnée | 0 | 1 |
|---|---|---|
| Valeurs | | |
| 0 | J | 0 |
| 1 | K | 1 |

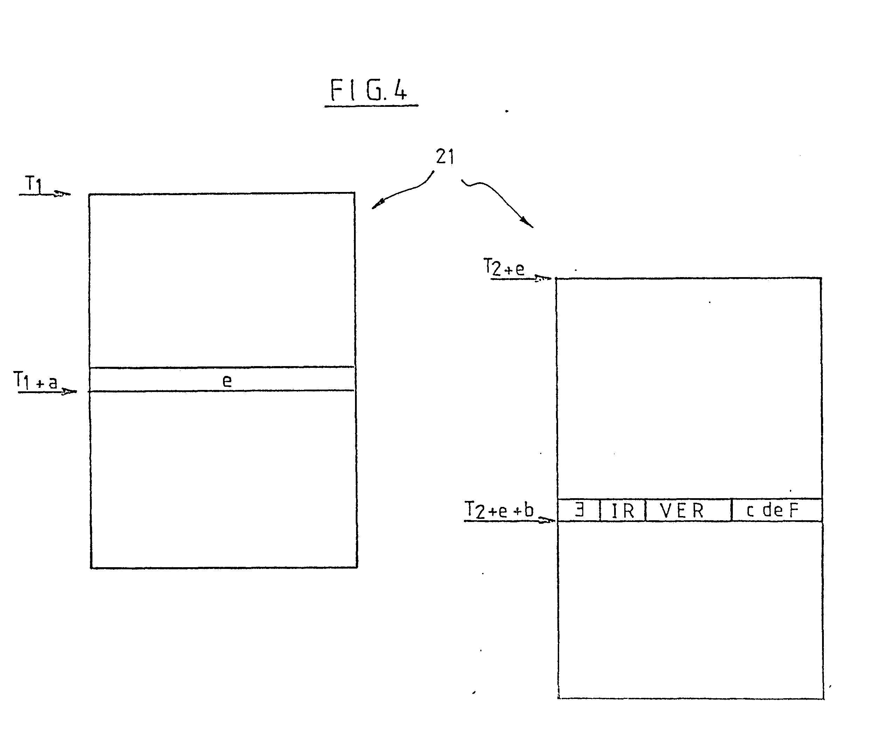

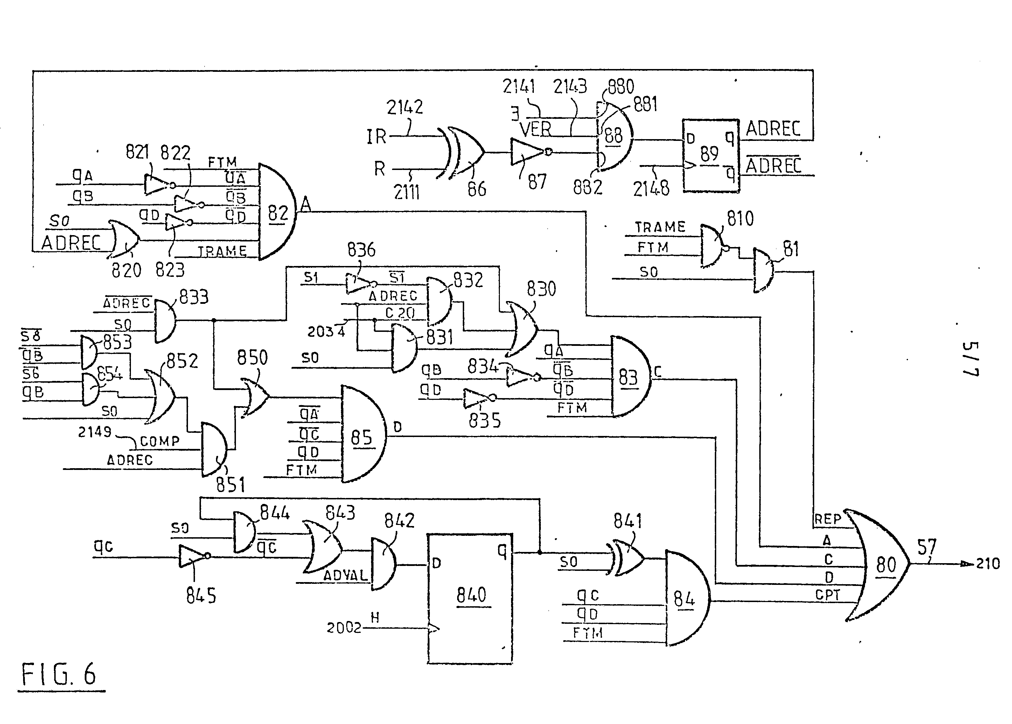

Compte tenu de la table de vérité la sortie (2003) (VAL) indique la valeur de la donnée ou de la non-donnée et un registre (202) à décalage branché sur la sortie (2003) sera chargé dans le cas d'un début de trame par les huit bits suivants: 0, 1, 0, 0, 0, 1, 0, 0, et dans le cas d'une fin de trame par les bits suivants 0, 1, 1, 1, 0, 1, I, E, (E et I = valeur indifférente soit 0, soit 1). Le bit I à 1 indique le dernier paquet (ou l'unique paquet) d'un message transmis. La sortie donnée (2001) indique si l'on a une donnée ou une non-donnée. Dans le cas d'un début de trame ou d'une fin de trame on aura les huits bits suivants dans un registre à décalage (204) branché sur la sortie (2001): 0, 0, 1, 1, 0, 0, 1, 1, et dans le cas d'une donnée on aura un signal toujours égal à 1, et par conséquent les huits bits du registre (204) à 1. Les décalages sont commandés par le signal (H) délivré sur la sortie (2002) du circuit (200) et branché sur l'entrée d'horloge des registres (202) et (204). La comparaison des valeurs courantes des huit bits des registres (202) et (204) à des configurations de bits attendues sera effectuée par un circuit logique (205), facilement concevable pour l'homme de métier et dont les sorties (2050), (2051), délivrent respectivement les signaux (DT) et (FT) indiquant respectivement un début de trame et une fin de trame. Les sorties (2051) et (2050) sont reliées respectivement aux entrées (RAZ) (remise à zéro) et (VA) (validation) d'un compteur (206). L'entrée (H) (horloge) du compteur (206) reçoit le signal d'horloge provenant de la sortie (2002) du circuit (200). Le compteur (206) sert de séquenceur de début de trame. Il est mis à zéro à la mise sous tension de l'équipement, et cycliquement (en cas de fonctionnement normale) à la fin de la réception de chaque trame, afin d'être prêt à opérer au début d'une nouvelle trame. Une première sortie du compteur (206) délivre le signal (DDA) (durée adresse destinataire) dont le niveau change lors du début du champ (DA) de la trame et reste inchangé pendant toute la durée correspondante à ce champ. Pour fixer les idées si le champ (DA) comprend N bits la durée du signal (DDA) correspond à N coups d'horloge. Une deuxième sortie (DSA) (durée adresse source) du circuit (206) délivre un signal dont le niveau change avec le début du champ (SA) et se prolonge pendant la durée de ce champ. Une troisième sortie (DINFO) (durée information) délivre un signal qui change de niveau au début du champ information (INFO) et reste à ce niveau pendant toute la durée de sa réception. Le signal de la sortie (DDA) du compteur (206) est envoyé sur une première entrée d'une porte NON-ET (209) dont la deuxième entrée reçoit le signal (H) délivré par un circuit inverseur (212) dont l'entrée est reliée à la sortie (2002) du circuit (200). La sortie de la porte (209) est reliée à l'entrée d'horloge d'un registre à décalage (201) à N bits dont l'entrée des données reçoit le signal (VAL) délivré par la sortie (2003). Le signal (DDA) valide donc la transmission du signal (H) à l'entrée d'horloge du registre à décalage (201) et va permettre le décalage des N bits du champ (DA). Ce nombre de bits (N) correspond au nombre de bits contenus dans le champ adresse destinataire. Une première partie du champ adresse destinataire constituée par N1 bits est reliée par une liaison (216) aux entrées parallèles d'une porte ET (208) dont une entrée reçoit également le signal (DSA) et qui lorsque toutes les entrées en parallèle ont la même valeur 1 délivre à sa sortie un signal envoyé sur une entrée d'interruption (2146) du microprocesseur (214) ou d'un équipement équivalent pour mettre en route le programme. La sortie de la porte ET (208) délivre donc un signal de valeur logique 1 lorsque la première partie N1 du champ adresse destinataire correspond à la valeur indiquant qu'il s'agit d'un adressage dit «logique» et par contre délivre un signal correspondant à une valeur logique zéro dans le cas où cette première partie N1 de l'adresse destinataire ne correspond pas à un adressage logique. La deuxième partie du champ adresse destinataire constitué par N2 bits est reliée au microprocesseur (214) par l'intermédiaire d'un circuit de multiplexage (217) et d'un bus de liaison (211). Cette deuxième partie correspond à l'éventuelle adresse logique. Le signal envoyé par la porte ET (208) en synchronisme avec le signal (DSA) déclenche la recherche de l'adresse logique dès l'apparition du signal (DSA). Le microprocesseur (214) est relié de façon connue par un bus d'adresse (2144) et un bus de donnée (2145) à une mémoire (213) qui sert de mémoire de stockage du programme de recherche d'adresse logique et de moyen de mémorisation des tables contenant les adresses logiques. Dans le but d'augmenter le nombre de possibilités d'adresses logiques tout en limitant la taille des tables en mémoire, et le nombre de bits du champ adresse destinataire, on utilise pour cet adressage le procédé qui va être décrit à l'aide de la figure 4. La table d'adresses logiques (21) contenue dans la mémoire (213) comporte en fait deux tables (T1 et T2) représentées à la figure 4. Le microprocesseur extrait de la deuxième partie N2 du champ adresse destinataire constituée par N2 bits un nombre «a» de bits représentés figure 2 et constitués par les bits de poids forts. Ces bits «a» sont fournis au microprocesseur (214) par la liaison (211) et servent à définir l'adresse T1+a (figure 4) recherchée par le dispositif dans la première table (T1). Dans le cas où, à cette adresse il existe un contenu (e), par exemple non nul, le programme se poursuit en prélevant dans les N2 bits de la deuxième partie N2 du champ adresse destinataire un nombre «b» de bits (figure 2) que l'on ajoute au contenu (e) de la table (T1) ceci de façon à définir l'adresse recherchée (T2) + (e) + (b) dans une table (T2) dont le contenu est constitué par un bit $\overline{J}$ indiquant l'existence de l'adresse logique, un bit (IR) indiquant l'image de routage, un champ de bits (VER) permettant une vérification des mécanismes liés à la reconnaissance d'adresse et un champ de bits (C de F) permettant un contrôle de flux (capacité mémoire disponible pour cette adresse logique pour recevoir des messages). Dans le cas où dans la table (T2) le bit $\overline{J}$ indiquant l'existence est positionné à 1 et où après application d'un algorithme de vérification la valeur indiquée par les N2 bits de la deuxième partie du champ adresse correspond à la valeur contenue dans le champ de vérification (VER) de la table (T2) le microprocesseur (214) envoie les signaux ($\overline{J}$), (2141), (IR) (2142), et (VER) (2143) à un circuit (8) de modification du bit (A), du champ (CV). Le signal (C20) émis sur la sortie (2034) du circuit (203) indique si la trame qui vient d'être reçue a pu être copiée complètement dans le circuit (203). En effet, une trame précédente pouvait s'y trouver encore partiellement (erreur de cadence en réception). Le signal (C20) permet au circuit (8) de calculer le bit (C) émis. Le microprocesseur (214) prend alors en compte les sorties parallèles (2030), reliées au bus (211) par un circuit de multiplexage (218), d'un registre à décalage (203) à (P) bits (P correspondant au nombre de bits du champ information INFO). Ce registre à décalage reçoit sur son entrée donnée (2031) les données fournies par le signal (VAL) délivré par la sortie (2003) du circuit (200) et sur son entrée d'horloge (2032) le signal délivré par une porte NON-ET (215) dont une première entrée reçoit le signal (H) délivré par la sortie du circuit (212) et dont une deuxième entrée reçoit le signal (DINFO) sortant du compteur (206). Le signal (DINFO) valide la transmission

de l'horloge ($\overline{H}$ pendant toute la durée de passage du champ information dans le circuit (200). Le microprocesseur (214) compare alors la valeur (C de F) trouvée dans la table (T2) (qui représente la capacité mémoire courante pour recevoir des messages sur l'adresse logique considérée) à la longueur (L) du message reçu (premier octet du champ INFO). Si (L) ≤ (C de F), la place mémoire est suffisante pour recevoir le message. Le microprocesseur (214) envoie alors le signal (COMP) à 1(2149). Sinon si (L) > (C de F), (COMP) est émis à 0 vers le circuit (8). Ce signal (COMP) permet au circuit (8) de calculer le bit (D) émis. Dans le cas où à l'adresse indiquée par «a» il n'existe pas de contenu (e) la recherche est terminée et ceci indique que l'adresse logique n'existe pas dans la table (T2). Par conséquent le message transporté par la trame (4) et disponible sur les sorties (2030) du registre (203) ne doit pas être pris en compte par la station ce qui correspond aux colonnes ($\overline{R}$) du tableau de modification (A) et (C). Ce procédé permet donc d'effectuer une recherche de l'adresse logique performante en temps, tout en limitant la taille des tables en mémoire, et tout en permettant de créer plusieurs milliers d'adresses logiques dans une station, dans un espace de plusieurs millions d'adresses possibles sur le réseau de communication. La liaison (2140, 2033) du microprocesseur vers le registre assure la validation de la sortie en parallèle des bits stockés dans le registre (203) vers les couches protocolaires supérieures de la station lorsque l'information doit être prise en compte par la station, c'est-à-dire lorsque l'adresse logique existe dans la mémoire (213), lorsque la trame a pu être copiée (momentanément) dans le circuit (203) et lorsque le message peut être mémorisé intégralement dans la mémoire du communicateur pour être traité par les couches protocolaires supérieures. La sortie (2003) du circuit (200) délivrant les données est réliée par un circuit (8) de modification de la valeur des bits (A), (C), (D) et du compteur (CPT) du champ vide (CV) à un multiplexeur (210) qui est lui-même branché au travers d'un circuit de codage en Manchester (non représenté) à la sortie (S) de la station. Le multiplexeur (210) est commandé par la sortie (2147) du microprocesseur délivrant le signal EMISSION (signifiant lorsqu'il est à 1 que la station est en réception. Cette sortie (S) est reliée par un câble (3) à l'entrée d'une autre station. Une deuxième entrée du multiplexeur (210) reçoit du bus (211) au travers d'un circuit sérialisateur (2110) et de la sortie (64) d'un circuit (6), le signal valeur interne (VALIN) qui correspond à la succession de bits d'une trame qu'une station doit émettre lorsqu'elle travaille en émission et qui est complétée dans le circuit (6) par l'émission du champ vide (CV). Le circuit (8) représenté à la figure 6 est commandé par les sorties (2141), (2142), (2143) et (2149) du microprocesseur (214) et par la sortie (2034) du circuit (203). En fonctionnement si le signal EMISSION n'est pas actif (fonctionnement en mode émission) le multiplexeur délivre le signal issu de la sortie (64) du circuit (6) qui est la succession des bits d'une trame émise en série. Dans le cas où le signal EMISSION estactif (fonctionnement en mode réception) le multiplexeur (210) délivre sur sa sortie (s) le signal fourni par la liaison (57).

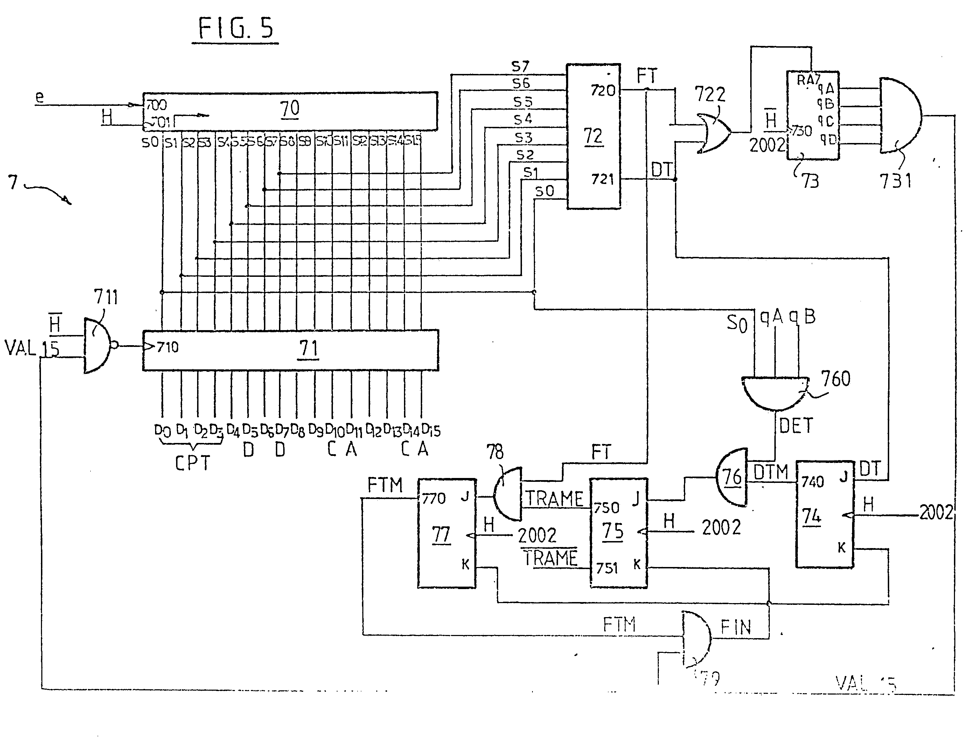

Le circuit (7) représenté en figure 5 reprend une parti du circuit (20) de la figure (3) et décrit plus précisément la réception de la fin d'une trame et plus particulièrement la mémorisation du champ vide (CV); le circuit (7) comporte un registre à décalage (70), dont l'entrée (700) reçoit les caractères arrivant sur l'entrée (e) de la station ces caractères ayant été au préalable décodés par un décodeur Manchester de façon à extraire du signal transmis les caractères et le signal d'horloge. Le signal d'horloge issu du décodeur Manchester non représenté ou de la sortie (2002) du circuit (200) est envoyé sur l'entrée d'horloge (701) du registre à décalage. Ce registre à décalage comporte 16 sorties (S.0) à (S.15) qui sont elles-mêmes reliées aux entrées d'un registre parallèle (71) à 16 bits assurant la mémorisation des informations présentes sur les sorties (S.0) à (S.15) lorsque son entrée (710) reçoit le signal de transfert délivré par la sortie (711) d'une porte NON-ET à deux entrées dont une entrée reçoit un signal (VAL15) et l'autre entrée reçoit le signal (H). Les sorties (S0) à (S7) du registre à décalage (70) sont reliées aux entrées d'un circuit (72) assurant la reconnaissance du début de trame et de la fin de trame et délivrant sur sa sortie (720) un signal de niveau 1 lorsqu'il détecte le champ (FT) de fin de trame et sur sa sortie (721) un signal de niveau 1 lorsqu'il détecte le champ (DT) de début de trame. Les signaux (DT) et (FT) sont fonctionnellement identiques à ceux générés figure (3) en sortie du circuit (205). Ces signaux (DT) et (FT) sont envoyés sur une porte OU (722) à deux entrées dont la sortie est reliée à l'entrée remise à zéro (RAZ) d'un compteur (73) modulo 16. L'entrée d'horloge (730) de ce compteur reçoit le signal (H) et les sorties (qA); (qB); (qC); (qD) de ce compteur sont reliées aux quatre entrées d'une porte ET-(731) dont la sortie délivre le signal (VAL15) qui passe au niveau 1 lorsque toutes les sorties (qA); (qB); (qC); (qD) sont à 1 c'est-à-dire que le compteur a compté seize coups d'horloge après l'apparition du signal début de trame ou fin de trame; (qA) est la sortie poids faible, et (qD) est la sortie poids fort du compteur (73). Ainsi grâce à ce signal (VAL15) et au front descendant d'horloge suivant, le circuit (711) assure le transfert des seize bits rentrés en série dans le registre à décalage (70) et sortis en parallèle dans le registre (71) et ces seize bits sont mémorisés sur les sorties (D0) à (D15). Le signal début de trame délivré par la sortie (721) du circuit (72) est envoyé à l'entrée (J) d'une bascule JK (74) dont la sortie (740) délivre son signal à l'entrée d'une porte ET-(76) recevant sur sa deuxième entrée un signal de détection de trame (DET) délivré par un circuit de traitement du quatrième bit du premier octet suivant le champ (DT) et qui lorsqu'il est positionné à 1 indique l'arrivée d'une trame. Ce bit (DET) à 0 indique la réception d'un jeton. La sortie de la porte ET-(76) est reliée à l'entrée (J) d'une bascule (75) dont la sortie (750) délivre un signal (TRAME) à l'entrée d'une porte ET-(78) dont la deuxième entrée reçoit le signal fin de trame (FT) délivré par la sortie (720) du circuit (72). La sortie (751) délivre le signal (TRAME). La sortie de la porte ET-(78) est reliée à l'entrée (J) d'une bascule JK (77) dont la sortie (770) délivre un signal (FTM) (fin de trame mémorisée). Ce signal (FTM) est envoyé sur une première entrée d'une porte ET-(79) dont la deuxième entrée reçoit le signal (VAL15) et dont la sortie délivre le signal (FIN) qui est envoyé sur les entrées (K) des bascules (74), (75) et (77) de façon à assurer leur remise à 0 lorsque la trame suivie des 16 bits du champ vide est passée et qu'il n'y a plus d'informations utiles à l'entrée de la station. Le signal (DET) est délivré par une porte (760) à trois entrées dont une première entrée reçoit la sortie (S0) du registre à décalage (70) les deux entrées suivantes reçoivent respectivement les sorties (qA) et (qB) du compteur (73). Ainsi dès que le circuit (72) détecte un début de trame celui-ci est mémorisé par la bascule (74). Puis par l'entrée (S0) du registre à décalage et par les sorties (qA) et (qB) du compteur (73) on sélectionne le quatrième bit du premier octet suivant l'apparition du signal (DTM), puisque que l'on prend en compte le caractère présent en (S0) au moment où (qA), (qB) sont égaux à 1 c'est-à-dire au quatrième coup d'horloge. Dans le cas ou (S0) avait pour valeur 1, c'est-à-dire que le signal (DET) indique bien que l'on avait à faire à une trame, la sortie de cette porte (760) et de la porte ET-(76) positionne à 1 la bascule (75) qui va mémoriser le fait que l'on a une trame à traiter. L'apparition du signal fin de trame (FT) va faire monter la sortie (FTM) de la bascule (77) à 1 ce qui va indiquer que la fin de trame est mémorisée et produire l'apparition du signal (FIN) dès que le signal (VAL15) va monter à 1 c'est-à-dire 16 coups d'horloge après l'apparition du signal (FT), ce qui correspond à la fin de la réception du champ vide (CV). A ce moment là, les bascules (74), (75) et (77) sont remises à 0 par ce signal (FIN) qui indique la fin définitive de la trame.

La figure 6 représente le circuit (8) de modification du champ vide et de répétition de l'information reçue. Ce circuit comprend une porte OU-(80) à plusieurs entrées dont la sortie est reliée au travers du multiplexeur (210) et d'un codeur Manchester non représenté à la sortie (s) de la station. Les entrées de cette porte OU-(80) reçoivent les signaux (REP) (répétition), (A) (adresse reconnue), (C) (copie), (D) diffusion), (CPT) (compteur du nombre de stations). Ces signaux sont fournis respectivement par les sorties des portes ET-(81), (82), (83), (85), (84). La porte ET-(81) délivrant le signal (REP) (répétition) reçoit sur une première entrée le signal (S0) délivré par la sortie du registre à décalage (70) et sur une deuxième entrée la sortie d'une porte NON-ET (810) recevant sur ses entrées le signal (TRAME) délivré par la sortie (750) de la bascule (75) et sur sa deuxième entrée le signal (FTM) délivré par la sortie (770) de la bascule (77). Ainsi lorsque le signal TRAME = 0 (inter-trame), et dès l'apparition du signal (TRAME) et pendant tout le temps où (FTM) restera au niveau 0 la porte ET-(81) va reproduire le signal (S0) et donc répéter en sortie l'information arrivant en entrée sur le registre (70). Lorsque le signal (FTM) passe au niveau 1 et que le signal (TRAME) reste maintenu au niveau 1 la sortie de la porte NON-ET (810) passe au niveau 0 et par conséquent la porte (81) ne transmet plus le signal (S0). Donc il n'y a plus reproduction du signal d'entrée, et ceci pendant les 16 bits du champ vide (CV) puisque le signal (TRAME) revient au niveau 0 lorsque le signal (FIN) apparaît c'est-à-dire après les 16 bits du champ vide (CV). Le signal représentant le bit (A) est délivré par la sortie de la porte ET-(82) recevant en entrée le signal (FTM) délivré par la sortie (770) de la bascule (77), les signaux ($\overline{qA}$), ($\overline{qB}$), ($\overline{qD}$) délivrés par les sorties des inverseurs (821), (822) et (823) reliés aux entrées (qA), (qB), (qD) du compteur (73), la sortie d'une porte OU-(820) et le signal (TRAME) délivré par la sortie (750) de la bascule (75). La porte OU-(820) reçoit sur une première entrée le signal (S0) et sur une deuxième entrée un signal (ADREC) (adresse reconnue) délivré par la sortie (q) de la bascule (89).

Ce signal (ADREC) est délivré par un circuit constitué par une porte ET-(88) à trois entrées recevant sur son entrée (880) un signal $\overline{\mathcal{J}}$ provenant de la sortie (2141) indiquant que l'adresse logique existe, sur sa deuxième entrée (881), un signal (VER) provenant de la sortie (2143) indiquant que la vérification des mécanismes de reconnaissance d'adresse, a été faite et qu'elle est correcte, et sur sa troisième entrée (882) la sortie d'un inverseur (87) dont l'entrée reçoit la sortie d'un OU-EXCLUSIF (86) à deux entrées. La première entrée reçoit le signal (IR) image de routage fourni par la sortie (2142) et la deuxième entrée reçoit le signal (R) fourni par la liaison (2111) et délivrant un signal correspondant à la valeur du bit (R) du champ (DA) de la trame. Le signal (R) reçu dans le champ DA de la trame doit être égal au bit IR trouvé dans la table T2. L'ensemble de ces signaux délivre en sortie un signal à l'entrée (D) d'une bascule (89) dont la sortie est envoyée sur la porte (820). La sortie de la bascule (89) est au niveau 1 lorsque la sortie de la porte ET (88) est au niveau 1 et que l'entrée d'horloge de la bascule reçoit le signal émis par la sortie (2148) du microprocesseur. La sortie de la porte ET (88) est au niveau 1 lorsque chacune de ses entrées est au niveau 1 c'est-à-dire lorsque l'entrée (880) ($\overline{\mathcal{J}}$, existence de l'adresse dans la table), l'entrée (881), (VER, vérification du processus de recherche de l'adresse) et l'entrée (882) (issue de comparateur (55) entre IR et R) sont au niveau 1. Le comparateur OU-EXCLUSIF (86) suivi de l'inverseur (87) fournit un niveau 1 sur l'entrée (882) si et seulement si (IR) (fourni par la table T2), et (R) (reçu dans le champ adresse destinataire de la trame courante) sont égaux. Par conséquent ce circuit permet de s'assurer que dans le cas où la station a reconnu l'adresse logique le signal (ADREC) est au niveau 1. Ainsi la sortie de la porte (820) est au niveau 1 si au moins un des deux signaux (S0) ou (ADREC) est au niveau 1, ce qui correspond au fait que, lorsque (S0) est au niveau 1 ((A) reçu = 1) une station en amont s'est reconnue comme adressée et lorsque (ADREC) est au niveau 1 la station elle-même s'est reconnue comme adressée. Pour sélectionner parmi les caractères entrant et passant sur la sortie (S0) du registre à décalage (70) ceux qui correspondent au bit (A) du champ vide (CV), on utilise les sorties (qA); (qB); (qD) du compteur (73) et le signal fin de trame mémorisé qui indique que le champ fin de trame (FT) vient de passer. Les signaux (qA), (qB), (qD) indiquant que l'on prend en compte le signal présent sur la sortie (S0) lors du premier coup et du cinquième coup d'horloge ce qui correspond sur la table de vérité ci-après à la position 0 et 4. En effet compte tenu de la représentation de la trame et du champ vide sur la figure 2 et du fait que le décalage des caractères dans le registre (70) se produit de la gauche vers la droite, le premier coup d'horloge fera apparaître sur (S0) le bit (A) de la position 15 du champ vide (CV) et le cinquième coup d'horloge fera apparaître le bit (A) de la position 11 du champ vide (CV). Le signal (TRAME) envoyé sur la porte ET-(82) permet de s'assurer que l'on ne va pas prendre en compte le signal (S0) lorsqu'on est en train de traiter un passage de jeton, par exemple, car dans ce cas (TRAME) est à 0. La sortie de la porte ET-(83) délivre le bit (C), cette porte recevant sur ses entrées les signaux (qA); ($\overline{qB}$); ($\overline{qD}$); (FTM) et la sortie d'une porte OU-(830) à trois entrées dont la première entrée reçoit la sortie d'une porte ET-(833), la deuxième entrée la sortie d'une porte ET-(832), la troisième entrée la sortie d'une porte ET-(831). Le signal ($\overline{qB}$) est fourni par un inverseur (834) dont l'entrée est branchée à la sortie (qB) du compteur (73). Le signal ($\overline{qD}$) est fourni par la sortie d'un inverseur (835) dont l'entrée est branchée à la sortie (qD) du compteur (73). Une première entrée de la porte (831) est reliée à la sortie (S0) du registre à décalage (70), une deuxième entrée reçoit le signal (ADREC) délivré par la bascule (89), une troisième entrée reçoit un signal (C20) (copie) délivré par la sortie (2034) du circuit (203); ce signal (C20) indique, lorsqu'il est à 1, que la trame courante a pu être copiée complétement dans le circuit (203). (C20) indique, lorsqu'il est à 0, qu'il y a eu une erreur de cadence en réception. La porte ET-(832) reçoit également les signaux (ADREC) et (C20) copie et sur une troisième entrée un signal ($\overline{S1}$) délivré par un inverseur (836) relié à la sortie (S1) du registre à décalage (70). Le bit (C) émis sera au niveau 1 lorsque le signal (FTM) fin de trame sera au niveau 1 que la sortie de la porte OU-(830) est au niveau 1 et que les signaux (qA); ($\overline{qB}$) et ($\overline{qD}$) sont au niveau 1. En se référant à la table de vérité ci-dessous les signaux (qA); ($\overline{qB}$) et ($\overline{qD}$) sont au niveau 1 lors des deuxième et sixième coups d'horloge ce qui correspond aux positions 14 et 10 des bits (C) dans le champ (CV).

| S | qD | qC | qB | qA | Coup d'horloge |
|---|----|----|----|----|----------------|
| 0 | 0 | 0 | 0 | 0 | 1 |
| 1 | 0 | 0 | 0 | 1 | 2 |
| 2 | 0 | 0 | 1 | 0 | 3 |
| 3 | 0 | 0 | 1 | 1 | 4 |
| 4 | 0 | 1 | 0 | 0 | 5 |
| 5 | 0 | 1 | 0 | 1 | 6 |
| 6 | 0 | 1 | 1 | 0 | 7 |
| 7 | 0 | 1 | 1 | 1 | 8 |
| 8 | 1 | 0 | 0 | 0 | 9 |
| 9 | 1 | 0 | 0 | 1 | 10 |
| 10 | 1 | 0 | 1 | 0 | 11 |
| 11 | 1 | 0 | 1 | 1 | 12 |
| 12 | 1 | 1 | 0 | 0 | 13 |
| 13 | 1 | 1 | 0 | 1 | 14 |
| 14 | 1 | 1 | 1 | 0 | 15 |
| 15 | 1 | 1 | 1 | 1 | 16 |

La sortie de la porte OU-(830) sera au niveau 1 lorsque l'une des sorties des portes ET-(831); (832); (833) sera au niveau 1. La sortie de la porte ET-(831) est au niveau 1 lorsque l'entrée (S0) est au niveau 1 ce qui indique que le bit (C) arrivant était au niveau 1 et que les signaux (ADREC) et (C20) (copie) sont également au niveau 1. Ceci correspond à la colonne (R.C) de la deuxième table de vérité. La sortie (832) est au niveau 1 lorsque l'entrée (S̄1) est au niveau 1, l'entrée (S̄1) lors des deuxièmes et sixièmes coups d'horloge représente l'inverse du bit (A) reçu, c'est-à-dire l'indication qu'aucune station en amont ne s'est reconnue comme adressée. Cette situation correspond à la colonne (R.C) de la première table de vérité. Enfin la sortie (833) est au niveau 1 lorsque le signal (ADREC) est à 1 et que (S0) est à 1. Ceci exprime le fait que l'on ne modifie pas la valeur du bit (C) reçu sur (S0) lorsque l'adresse n'a pas été reconnue par la station. En effet dans ce cas seule la sortie 833 peut être à 1 les autres sorties des portes (832) et (831) restant à 0 puisque (ADREC) est égal à 0. Cette situation correspond aux colonnes (R̄) des tables donnant (A) et (C) en sortie. Le signal (CPT) est délivré par la sortie de la porte ET-(84) dont les entrées reçoivent les signaux (qC), (qD), (FTM) et la sortie d'une porte OU-EXCLUSIF (841). Cette porte OU-EXCLUSIF reçoit sur une de ses entrées le signal (S0) du registre à décalage (70) et sur sa deuxième entrée la sortie d'une bascule (840) dont l'entrée (D) reçoit la sortie d'une porte ET-(842). Cette porte ET-(842) reçoit une première entrée (ADVAL) (adresse valide) et la sortie d'une porte OU-(843). Le signal (ADVAL) indique un fonctionnement correct de la station ceci qu'il y ait eu reconnaissance ou non de l'adresse. Ce signal est fourni par des circuits de contrôle du bon fonctionnement du matériel de communication de la station. La porte OU-(843) reçoit sur une première entrée le signal (q̄C) délivré par un inverseur (845) relié à la sortie (qC) du compteur (73) et sur une deuxième entrée la sortie d'une porte ET-(844) dont une première entrée reçoit le signal (S0) et une deuxième entrée reçoit la sortie (q) de la bascule (840). Ainsi lorsque (qC) et (qD) sont à 1 ainsi que le signal de fin de trame (FTM), la sortie de la porte (84) reflète la sortie du OU-EXCLUSIF (841). (qC) et (qD) sont à 1 du treizième au seizième coup d'horloge suivant une fin de trame, ce qui correspond aux positions du champ vide représentant le compteur de station (CPT). Le circuit constitué par les portes (841); (842); (843); (844) et la bascule (840) se comporte comme un additionneur qui ajoute plus 1 à la valeur reçue dans le registre à décalage et représentant l'état du compteur (CPT) reçu. En effet la sortie de la porte (841) passe à 0 si (S0) est à 1 et si la sortie de la bascule (840) est à 1 ainsi que si (S0) est à 0 et si la sortie de la bascule (840) est à 0, et elle passe à 1 soit lorsque (S0) égal 1, et la sortie de la bascule (840) est égale à 0, soit lorsque la sortie de la bascule (840) est à 1 et que (S0) est à 0. Si le signal (ADVAL) reste à 0 (fonctionnement incorrect de la station), la sortie (q) de la bascule (840) restera à 0, la sortie du OU-EXCLUSIF (841) sera strictement identique à (S0), et donc la valeur de (CPT) émise (entrée porte (80)) reproduira la valeur des 4 bits reçus sur l'entrée (e) de la station entre le treizième et le seizième coup d'horloge qui suit (FT), c'est-à-dire la valeur du compteur (CPT) reçu et non modifiée. Au départ, la sortie de la bascule (840) est à 1 lorsque le signal (ADVAL) indiquant un fonctionnement correct est à 1 et lorsque le signal (q̄C) est à 1 ou la sortie de la porte (844) à 1. Le signal (q̄C) est à 1 lors des coups d'horloge 1 à 4 et des coups 9 à 12 ce qui permet de positionner à 1 la bascule (840) juste avant le coup qui correspond à l'apparition du premier bit représentatif du compteur (CPT) reçu sur la broche (S0) du registre à décalage (70). L'addition se fait en série bit par bit, 4 fois consécutivement, et la sortie de la bascule (840) représente en fait le report (0 ou 1) de l'opération d'addition sur le bit précédent. Ainsi, cette série est à 1 au départ (treizième coup d'horloge) pour simuler un report initial, et ainsi effectuer l'opération d'addition +1. Au treizième coup d'horloge le bit (S0) se trouve inversé entre l'entrée et la sortie de la porte (841), car la sortie (q) de la bascule (840) est à 1 (opération +1); simultanément, la sortie de la porte (844) dépend du signal (S0) et de la sortie de la bascule (840) qui avait été positionnée à 1. Par conséquent si (S0) correspondant au treizième coup d'horloge représente la valeur 0 la sortie de la bascule (840) passe à 0 (pas de report), tandis que si (S0) représente la valeur 1 la sortie de la bascule (840) reste à 1 (report) ce qui permettra au coup d'horloge suivant d'ajouter au signal (S0) la valeur 1. Ce circuit se comporte donc comme un circuit d'incrémentation de +1 du champ compteur (CPT). Le signal (D) émis est délivré par la sortie de la porte ET (85).

La porte ET 85 reçoit sur ses entrées les signaux (qĀ), (q̄C̄), (qD), (FTM) et la sortie de la porte OU (850). Les signaux (qĀ), (q̄C̄) et (qD) permettent la transmission d'un signal apparaissant à la sortie de la porte OU (850) lorsque (qĀ), (q̄C̄), (qD) et (FTM) sont à 1. Ceci se produit au 9ème et 11ème coup de l'horloge ce qui coïncide avec la présence du bit correspondant à l'information (D) reçue sur la borne (S0) du registre à décalage (70). Par conséquent la sortie de la porte OU (850) ne sera transmise que pendant les 9ème et 11ème coup d'horloge (voir table de vérité de (qA), (qB), (qC), (qD) ci-dessus) suivant l'apparition du signal (FTM), indiquant la détection du champ fin de trame (FT). La porte OU (850) reçoit d'une part la sortie d'une porte ET (833), d'autre part la sortie du porte ET (851). La porte ET 833) reçoit sur son entrée un signal (ĀDREC) et sur une deuxième entrée le signal (S0) provenant du registre à décalage (70). Par conséquent la sortie de la porte ET (833) permet de recopier la valeur du bit.

(D) reçu lorsque la station ne s'est pas reconnue comme adressée. La porte ET (851) reçoit, sur une première entrée, un signal (ADREC), sur une deuxième entrée, le signal (COMP) émis par la sortie (2143) un microprocesseur (214) et sur une troisième entrée la sortie d'une porte OU (852). La porte OU (852) reçoit, sur une première entrée, le signal (S0) provenant du registre à décalage (70), sur une deuxième entrée, la sortie d'une porte ET (854) et sur une troisième entrée, la sortie d'une porte ET (853). La porte ET (853) reçoit, sur une première entrée, un signal (S̄8) provenant après inversion de la sortie (S8) du registre à décalage (70) et sur une deuxième entrée, un signal (q̄B̄) provenant après inversion de la sortie (qB) du compteur (73). La porte ET (854) reçoit, sur une première entrée, un signal (S̄6) provenant après inversion de la sortie (S6) du registre à décalage (70) et sur une deuxième entrée, un signal (qB) provenant du compteur (73). Le signal (COMP) est élaboré par le microprocesseur (214) par comparaison des bits (C de F) lus dans la table T2 de la mémoire (213) d'une part, et des bits (L) du champ information obtenus sur le groupe d'entrées (218), indiquant la longueur totale du message reçu d'autre part. Ces bits (L) sont extrait du registre (203) par le multiplexeur (218) (figure 3), et les bits du champ (C de F) sont extraits de la table (T2) mémorisée dans la mémoire (213) à l'adresse (T2) + (e) + (b) fournie par le procédé d'adressage décrit ci-dessus. Au 9ème coup d'horloge suivant la détection de la fin de trame (FT) le signal (q̄B̄) est au niveau 1 et à ce moment là la sortie (S8) délivre la valeur d'un bit qui est représentatif du premier bit (A) reçu. Par conséquent, la sortie de la porte (853) sera au niveau 1 que lorsque le bit (A) reçu sera au niveau 0 c'est-à-dire lorsque aucune station en amont ne s'est reconnue comme adressée. De même au 11ème coup d'horloge le signal (qB) est au niveau 1 et à ce moment là la sortie (S6) du registre (70) délivre la valeur représentative du deuxième bit (A) reçu, celui qui est figuré sur la figure 2 dans la position 11. Lorsque ce bit (A) est également à 0 la sortie de la porte (854) est à 1. Ainsi quelle que soit la valeur du signal (D) reçu en (S0) si aucune station ne s'est reconnue comme adressée en amont les sorties des portes (853) et (854) seront au niveau 1 et par conséquent la porte (851) délivrera le signal (COMP) fourni en sortie du microprocesseur (214) si le signal (ADREC) est au niveau 1 ce qui correspond au fait que la station s'est reconnue comme adressée. Par contre si les bits (A) des positions 11 et 15 étaient à 1 les sorties des portes (853) et (854) seraient au niveau 0 et la sortie de la porte OU (852) ne peut être au niveau 1 que si le signal (S0) représentatif du bit (D) reçu est au niveau 1. Cette situation correspond au fait que toutes les stations qui se sont reconnues comme adressées en amont ont eu la capacité mémoire suffisante pour prendre en compte intégralement le message en cours de réception. Dans ce cas la sortie de la porte (851) varie comme la sortie (2149) délivrant le signal (COMP). Si par contre la valeur du bit (D) reçu en (S0) est égale à 0 la sortie de la porte (851) transmet la valeur 0 ce qui indique qu'une station en amont dans le réseau n'a pas pu accueillir le message courant. Lorsque toutes les stations en amont de la station se sont reconnues comme adressées et avaient la capacité mémoire suffisante pour recevoir le message, le signal (COMP) détermine la valeur du bit (D) à émettre en fonction de la comparaison des bits (L) représentatifs de la longueur du message reçu et (C de F) représentatifs du crédit mémoire disponible dans la station pour l'adresse logique qui a permis d'entrer ce message. Si le crédit mémoire est supérieur à la longueur L reçue, le signal (COMP) est au niveau 1 et par conséquent le bit (D) émis sera au niveau 1 pour autant que la station se soit reconnue comme adressée. Dans le cas où le crédit mémoire est insuffisant le signal (COMP) sera au niveau 0 et par conséquent le bit (D) émis sera au niveau 0 ce qui amènera les stations suivantes à maintenir ce niveau 0 pour le bit (D) du champ (CV).

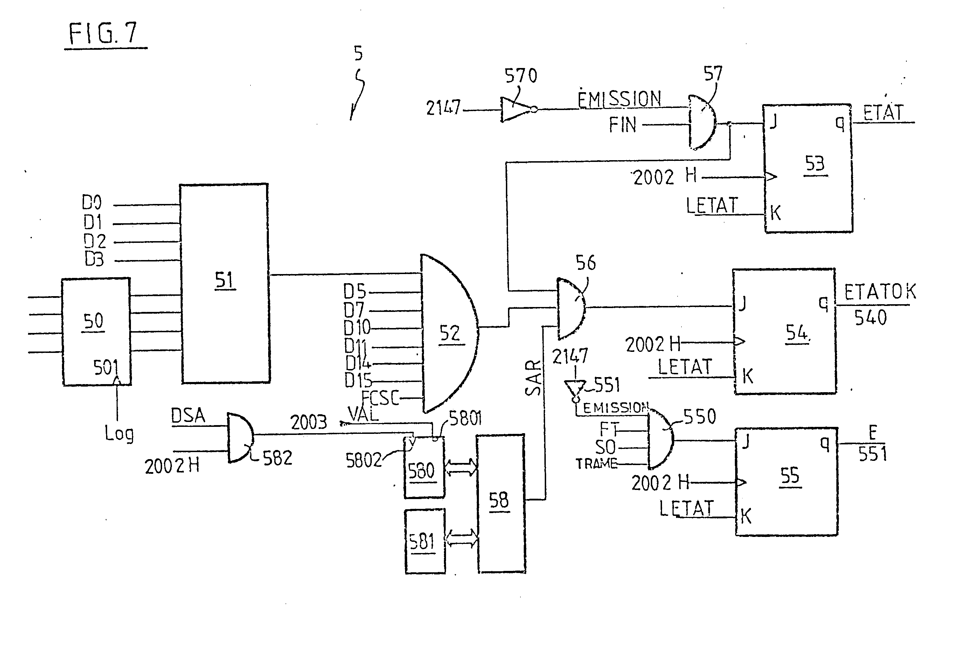

La figure 7 représente le circuit (5) de lecture de l'information contenue dans le champ (CV) au retour d'une trame dans une station émettrice et de vérification de la conformité de l'échange du message dans le réseau. Ce circuit comporte un registre (50) permettant par chargement par logiciel sur l'entrée (501) d'enregistrer une valeur représentative du nombre de stations présentes sur le réseau. Ce registre (50) est relié par ses sorties aux entrées d'un comparateur (51) dont les autres entrées reçoivent les signaux (D0) à (D3) du registre (71) de la figure 3. Les signaux (D0) à (D3) représentent lors de l'apparition du seizième coup d'horloge suivant la fin de trame (FT) la valeur du compteur (CPT) au retour à la station d'émission. En cas de concordance des deux valeurs, le comparateur (51) délivre sur sa sortie un signal de valeur 1 à une entrée d'une porte ET (52) dont les autres entrées reçoivent les signaux (D5), (D7), (D10), (D11), (D14), (D15) et un signal (FCSC). Les signaux (D5), (D7), (D10), (D11),

(D14), (D15) représentent respectivement les valeurs des bits (D), (D), (C), (A), (C), (A) que l'on a fait figurer en dessous des broches correspondantes du registre (71) de la figure 3. Lorsque toutes ces valeurs sont à 1, l'échange de message entre les différentes stations du réseau est correct et par conséquent la sortie de la porte ET-(52) est à 1. La génération du signal (FCSC), bien connue de l'homme de métier n'est pas représentée ici (code détecteur d'erreur). Le signal (FCSC) indique, lorsqu'il est à 1, que la trame, pendant le parcours de l'anneau, n'a pas été altérée par une erreur (de transmission de parasitage par exemple). La sortie de la porte (52) est reliée à une porte ET-(56) à trois entrées dont une deuxième entrée reçoit un signal (SAR) (Adresse source reconnue) qui indique par son niveau 1 que l'émetteur a bien reconnu son adresse dans la trame qui lui revient. Le signal (SAR) est délivré par la sortie d'un comparateur (58) dont les entrées reçoivent d'une part un registre (581) de mémorisation d'une adresse source précâblée et d'autre part un registre à décalage (580) recevant sur son entrée (5801) le signal (VAL) et sur son entrée d'horloge (5802) la sortie d'une porte ET (582) recevant en entrée le signal (DSA) provenant du circuir (206) et le signal (H) provenant de la sortie (2002) du circuit (200). La troisième entrée de la porte ET-(56) reçoit le signal de sortie d'une porte ET-(57) à deux entrées dont la première entrée reçoit le signal (FIN) fourni par la porte (79), et la deuxième entrée un signal (EMISSION) délivré par un inverseur (570) relié à la sortie (2147) du circuit de traitement (20), ce signal (EMISSION) indiquant que la station considérée est en émission. Lorsque le signal (EMISSION) est à 1, et le signal (FIN) est à la sortie (57) est à 1. La sortie de la porte ET-(57) est envoyée à l'entrée (J) d'une bascule (53) dont la sortie passe au niveau 1 sur le coup d'horloge suivant le passage de la sortie de la porte ET-(57) à 1. Cette sortie (ETAT) indique que la trame est revenue à la station émettrice et réveille le logiciel de cette station. La sortie de la porte ET-(56) est reliée à l'entrée (J) d'une bascule (54) dont la sortie (540) délivre un signal (ETAT OK) au niveau 1 lorsque la sortie de la porte ET-(56) est au niveau 1. Cette sortie (ETAT OK) indique que la vérification du champ vide (CV) est correcte et qu'il n'y a pas eu de défauts dans l'échange de message entre les stations. Enfin une bascule (55) délivre sur sa sortie (551) un signal erreur (E). Cette bascule (55) reçoit sur son entrée (J) la sortie d'une porte ET-(550) dont les entrées reçoivent le signal (EMISSION) délivré par un inverseur (551) relié à la sortie (2147) du circuit (20), un signal (FT) fin de trame, le signal (S0) et le signal (TRAME). Donc lorsque la station est en émission, que la fin de trame est détectée et que le signal (TRAME) est encore à la position 1 le bit (S0) du registre (70) représente le dernier bit du champ fin de trame (FT) c'est-à-dire la valeur du bit (E). Si cette valeur est égale à 0 ceci indique qu'aucune erreur de transmission n'a été décalée lors du passage dans les différentes stations. Dans le cas où (E) est égal à 1, ceci indique une erreur dans les transmissions entre les stations. Les bascules (53) (54) et (55) sont remises à zéro pour être correctement réutilisées à la prochaine trame émise, par le signal (LETAT) de lecture par le logiciel des signaux (ETAT), (ETAT OK) et E.

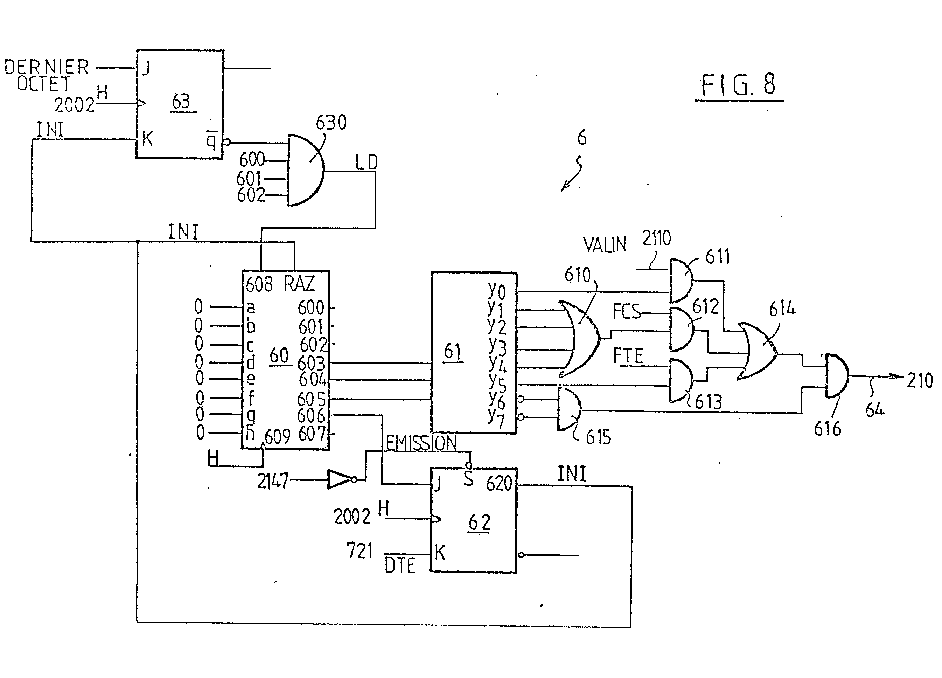

La Figure 8 représente le circuit (6) d'émission du champ vide (CV) après la trame. Ce circuit comporte un compteur 8 bits (60) dont les entrées de chargement (a) à (h) reçoivent un signal de valeur 0. L'entrée de chargement (608) de ce compteur reçoit le signal (LD) et l'entrée (RAZ) remise à 0 reçoit le signal (INI). Les sorties (600) à (602) du compteur sont reliées aux entrées d'une porte ET-(630) dont une dernière entrée reçoit la sortie (q̄) d'une bascule (63). Cette porte ET-(630) délivre le signal (LD) de chargement. La bascule (63) reçoit sur son entrée (J) un signal indiquant que le dernier octet du champ information (INFO) vient d'être émis. Quand ce signal est au niveau 1, la sortie (q̄) de la bascule (63) passe au niveau 0 et par conséquent le signal (LD) reste en permanence au niveau 0. Tant que le signal (DERNIER OCTET) (signalant le dernier octet du champ INFO) est au niveau 0 la sortie (q̄) est au niveau 1 et la sortie (LD) de la porte (630) passe au niveau 1 tous les 8 coups d'horloge, et provoque le chargement du compteur (60) par huit 0 (entrées (a) à (h)). Par conséquent tant que le dernier octet, du champ (INFO) ne s'est pas présenté à l'émission, le compteur (60) fonctionne comme un compteur de bits, les sorties (603) à (606) restant en permanence à 0. Dès le 9ème coup, suivant l'apparition du signal DERNIER OCTET la sortie (603) du compteur (60) passe au niveau 1 pendant un octet puis la sortie (604) passe au niveau 1 pendant deux octets, puis c'est la sortie (605) qui reste au niveau 1 pendant 4 octets. Ces sorties (603), (604), (605) sont envoyées sur les entrées d'un circuit décodeur (61). La sortie (Y0) de ce circuit décodeur (61) reste au niveau 1 tant qu'aucune des entrées du circuit est au niveau 1. Cette sortie (Y0) est reliée à l'entrée d'une porte ET-(611) dont la deuxième entrée reçoit les données à émettre, tout le champ (INFO) inclus, ces données à émettre étant fournies par la sortie (VALIN) du circuit (2110). La sortie de cette porte ET-(611) est reliée à l'entrée d'une porte OU-(614) dont la sortie est reliée à l'entrée d'une porte ET-(616) la sortie de cette porte ET étant reliée par le multiplexeur (210) et par un circuit de codage en Manchester (non représenté) à la sortie (s) de la station. Par conséquent, tant que l'on n'a pas détecté le début du dernier octet de la trame, le circuit fonctionne de façon à transmettre les données à émettre et dès le 9ème coup d'horloge suivant l'apparition du signal (DERNIER OCTET) la porte (611) se bloque et les données à émettre ne sont plus envoyées. Les sorties (Y0) à (Y7) du circuit (61) représentent le décodage des 8 octets suivant l'apparition du signal (DERNIER OCTET) et représenté par le code binaire sur trois bits fournis par les sorties (603) à (605) du compteur (60). Pendant les quatre octets suivants, une des sorties (Y1) à (Y4) est au niveau 1 et par conséquent la sortie de la porte OU-(610), émet un niveau 1 à l'entrée de la porte ET-(612) dont la deuxième entrée reçoit le signal délivré par la sortie (VALIN) du circuit (2110) représentant les valeurs des caractères du champ (FCS). La sortie (612) est envoyée à l'entrée de la porte OU-(614). Pendant l'octet suivant la sortie (Y5) est au niveau 1; cette sortie est envoyée sur une porte ET-(613) dont une deuxième entrée reçoit le champ (FTE) fin de trame émis délivré par la sortie (VALIN) du circuit (2110). La sortie de cette porte (613) est reliée à une entrée de la porte (614). Enfin pendant encore deux octets les sorties inversées (Y6) puis (Y7) sont au niveau 0 et par conséquent la sortie de la porte ET-(615) est au niveau 0 ce qui positionne également la sortie de la porte ET-(616) au niveau 0 puisque la sortie de la porte ET-(615) est reliée à l'entrée de la porte ET-(616). Par ailleurs dès la fin du septième octet suivant la fin du champ (INFO). (ce qui correspond à la fin d'émission du champ vide (CV)), la sortie (606) du compteur passe au niveau 1 ce qui positionne la sortie (620) de la bascule (62) au niveau 1. Cette sortie (620) représente le signal (INI) qui va remettre à 0 le compteur (60). Cette bascule (62) est remise à 0 par un signal début de trame émis (DTE). Un signal (EMISSION), indiquant lorsqu'il est à zéro que la station n'est pas en émission, reçu sur l'entrée de mise à 1 de la bascule (62) force la sortie (620) à 1 lorsque la station n'est pas émettrice, ce qui empêche le fonctionnement des circuits (60) et (61) d'émission. La sortie (q) de la bascule (63) reste à 1 lorsque la station n'est pas émettrice (car (INI) = 1); le compteur (60) est alors chargé cycliquement à 0 tous les huits coups d'horloge. Lorsque la station commence à émettre, le signal (INI) passe à 0, mais la sortie (q) de la bascule (63) reste à 1 jusqu'à ce que le signal (DERNIER OCTET) passe à 1; la sortie (q) passe alors à 0, ce qui empêche le chargement cyclique à 0 du compteur (60), et permet d'émettre les champs (FCS), (FT et le champ vide (CV). Lorsque l'émission est terminée (champ vide émis), le signal (INI) passe à 1, et la sortie (q) de la bascule (63) repasse à 1.

Lorsque le logiciel de la station d'émission a pris en compte les valeurs des signaux (ETAT, ETAT OK) et (E) il passe à la phase de confirmation implicite par envoi d'une autre trame ou d'un jeton si les valeurs des signaux (ETAT OK), (E) n'indiquent pas d'erreur dans le champ vide ou dans la transmission.

Dans le cas où (ETAT OK) signale un défaut dans l'échange des messages et/ou (E) signale une erreur dans la transmission, la station émet une trame d'annulation.

Si la station émettrice (EM) tombe en panne sans avoir ni annulé, ni confirmé, une procédure d'enquête est menée par une autre station pour savoir s'il y a lieu d'annuler ou de confirmer le message:

La distinction entre la signification du bit (C) et du bit (D) apparaît donc nettement à la lumière de ce qu'a été décrit, puisque le bit (C) signifie que la trame a été copiée correctement et complètement dans le tampon de réception (203). Une rafale de trame étant susceptible d'entrer dans la station en provenance d'une ou de plusieurs autres stations différentes, le tampon (203) peut saturer par suite de sa taille limitée. C'est qu'on appelle erreur de cadence en réception. Le bit (C) ne reflète donc dans ce cas qu'une impossibilité physique momentanée par une station de recevoir une trame et ce indépendamment de l'identité et de l'état du ou des processus locaux destinataires. Par contre le bit (D) exprime une place mémoire suffisante associé à l'adresse logique déterminée du message. Dans le cas où le bit (D) indique une saturation de la place mémoire (boîte aux lettres) associé à une adresse logique (DA) déterminée, il est nécessaire d'interrompre momentanément les émissions de messages vers l'adresse logique de cette boîte aux lettres. Ceci n'empêche pas la station qui a positionné le bit (D) d'être capable de recevoir immédiatement après, une multitude de messages pour d'autres adresses logiques.

Il est bien évident que des modifications de l'invention sont à la portée de l'homme de métier.

## Revendications

1. Procédé d'échange de messages dans un réseau en anneau entre une station émettrice et plusieurs stations du réseau auxquelles un message contenu dans une trame est susceptible d'être adressé, le procédé comportant l'émission par la station émettrice (EM) d'un champ vide (CV) contenant au départ aucune information et la modification d'au moins un bit (C) indiquant que toutes les stations adressées ont bien recopié le message ou qu'au moins une station adressée n'a pas recopié le message, caractérisé en ce qu'il comporte aussi les étapes suivantes:

modification de l'information contenue dans ce champ vide (CV) au passage dans chaque station par incrémentation dans chaque station d'un champ compteur (CPT) dont la capacité est en relation avec le nombre de stations du réseau,

– modification ou recopie d'au moins un bit (A) indiquant qu'au moins une station s'est reconnue comme adressée, ou qu'aucune station ne s'est reconnue comme adressée,

– émission d'un champ (FT) indiquant la fin de la trame avant le champ vide (CV),

– et modification ou recopie d'un bit (E) du champ (FT) indiquant la fin de la trame en relation avec la validité de la trame.

2. Procédé selon la revendication 1 caractérisé en ce que le champ vide correspondant à au moins un octet d'information.

3. Procédé selon la revendication 1 ou 2 caractérisé en ce qu'il comporte en outre une étape de lecture de l'information modifiée du champ CV et bit E du champ FT au retour à la station émettrice EM pour s'assurer que le message a été vu par toutes les stations et retenue par les stations concernées, et qu'il n'y a pas eu d'erreur dans la transmission.

4. Procédé selon la revendication 3 caractérisé en ce que dans le cas où la station EM constate une erreur signalée par le contenu des bits (A, C; CPT, E), elle émet une trame d'annulation du message précédent pour toutes les stations.

5. Procédé selon la revendication 4, caractérisé en ce que la trame reçue correctement par l'ensemble des stations destinatrices n'est validée que par le passage d'une autre trame ou d'un jeton sur le réseau.

6. Procédé selon une des revendications précédentes caractérisé en ce que les bits (A) et (C) sont au nombre de deux et que les étapes de modification de ces bits sont doublées pour permettre une amélioration de la sécurité.

7. Procédé selon la revendication 1 ou 4 caractérisé en ce que le bit (A) est inchangé lorsque la valeur reçue correspondait déjà à l'état binaire 1 et modifié à 1 lorsque la valeur reçue correspond à l'état binaire 0 et que la station s'est reconnue comme adressée.

8. Procédé selon la revendication 1 ou 4, caractérisé en ce que le bit (C) est maintenu à l'état binaire 0 lorsque aucune station n'est adressée ou qu'une station adressée n'a pas recopié l'information et modifié ou maintenu à la valeur binaire 1 lorsque toutes les stations adressées ont recopié correctement.

9. Dispositif de mise en œuvre du procédé selon l'une des revendications précédentes caractérisé en ce que chaque station comporte:

des moyens (6) d'émission d'un champ vide CV;

des moyens (7) de réception et de stockage de l'information contenue dans un champ vide et des moyens de détection du passage du champ vide;

des moyens (20) de reconnaissance de l'adressage ou du non adressage de la station et de prise en compte de l'information INFO;

des moyens (8) de modification de l'information véhiculée par le champ vide en fonction du résultat fourni par les moyens de reconnaissance d'adressage (20);

des moyens de modification d'un bit (E) du champ indiquant la fin de la trame en relation avec la validité de la trame.

10. Dispositif selon la revendication 9 caractérisé en ce qu'il comporte des moyens (5) de lecture de l'information contenue dans le champ vide permettant de comparer le nombre de stations du réseau enregistré dans une mémoire (50) avec le nombre de stations traversées par le message et d'indiquer à l'organe de traitement (20) de la station que le message a été correctement pris en compte par les stations qui se sont reconnues.

**Patentansprüche**

1. Verfahren zum Austauschen von Nachrichten in einem Ringnetz zwischen einer Sendestation und mehreren Stationen des Netzes, an die eine in einem Raster enthaltene Nachricht adressiert werden kann, wobei dieses Verfahren umfasst:

— die durch die Sendestation (EM) erfolgende Aussendung eines Leerfeldes (CV), das am Anfang keine Information enthält, sowie die Veränderung wenigstens eines Bits (C), das anzeigt, dass alle adressierten Stationen die Nachricht tatsächlich kopiert haben oder dass wenigstens eine adressierte Station die Nachricht nicht kopiert hat, dadurch gekennzeichnet, dass es auch die folgenden Schritte umfasst:

— Veränderung der in diesem Leerfeld (CV) enthaltenen Nachricht beim Durchlauf in jeder Station durch in jeder Station erfolgende Inkrementierung eines Zählfeldes (CPT), dessen Kapazität mit der Anzahl der Stationen des Netzes in Verbindung steht,

— Veränderung oder Kopieren von wenigstens einem Bit (A), das anzeigt, dass wenigstens eine Station sich als adressiert erkannt hat oder dass keine Station sich als adressiert erkannt hat.

— Aussenden eines Feldes (FT), das das Ende des Rasters vor dem Leerfeld (CV) anzeigt,

— und Veränderung oder Kopieren eines Bits (E) des Feldes (FT), das das Ende des Rasters in Verbindung mit der Gültigkeit des Rasters anzeigt.

2. Verfahren nach Anspruch 1, dadurch gekennzeichnet, dass das Leerfeld wenigstens einem Informationsoktett entspricht.

3. Verfahren nach Anspruch 1 oder 2, dadurch gekennzeichnet, dass es ferner einen Schritt zum Auslesen der veränderten Information des Feldes CV und des Bits E des Feldes FT bei der Rückkehr zur Sendestation EM umfasst, um sich zu vergewissern, dass die Nachricht von allen Stationen gesehen worden und von den beteiligten Stationen festgehalten worden ist und dass in der Übertragung kein Fehler stattgefunden hat.

4. Verfahren nach Anspruch 3, dadurch gekennzeichnet, dass, falls die Station EM einen durch den Inhalt der Bits (A, C; CPT, E) angezeigten Fehler feststellt, sie für alle Stationen ein Raster zum Annulieren der vorausgehenden Nachricht sendet.

5. Verfahren nach Anspruch 4, dadurch gekennzeichnet dass das von allen Bestimmungsstationen richtig empfangene Raster nur durch den Durchlauf eines anderen Rasters oder eines Jetons über das Netz freigegeben wird.

6. Verfahren nach einem der vorstehenden Ansprüche, dadurch gekennzeichnet, dass es zwei Bits (A) und (C) gibt und dass die Schritte zur Veränderung dieser Bits wiederholt werden, um eine Verbesserung der Sicherheit zu ermöglichen.

7. Verfahren nach Anspruch 1 oder 4, dadurch gekennzeichnet, dass das Bit (A) unverändert bleibt, wenn der empfangene Wert dem Binärzustand 1 schon entsprach, und dass es auf 1 verändert wird, wenn der empfangene Wert dem Binärzustand 0 entspricht, und dass die Station sich als adressiert erkannt hat.

8. Verfahren nach Anspruch 1 oder 4, dadurch gekennzeichnet, dass das Bit (C) auf dem Binärzustand 0 festgehalten wird, wenn keine Station adressiert ist oder wenn eine adressierte Station die Information nicht kopiert hat, und dass es verändert oder auf dem Binärwert 1 festgehalten wird, wenn alle adressierte Stationen richtig kopiert haben.

9. Vorrichtung zur Durchführung des Verfahrens nach einem der vorstehenden Ansprüche, dadurch gekennzeichnet, dass jede Station umfasst:

– Mittel (6) zur Aussendung eines Leerfeldes CV;

– Mittel (7) zum Empfangen und Speichern der in dem Leerfeld enthaltenen Information sowie Mittel zur Erfassung des Durchlaufs des Leerfeldes;

– Mittel (20) zur Erkennung der Adressierung oder der Nichtadressierung der Station sowie zur Berücksichtigung der Information INFO;

– Mittel (8) zur Veränderung der Information, welche durch das Leerfeld in Abhängigkeit von dem durch die Mittel (20) zur Erkennung der Adressierung gelieferten Ergebnis befördert wird:

– Mittel zur Veränderung eines Bits (E) des Feldes, das das Ende des Rasters in Verbindung mit der Gültigkeit des Rasters anzeigt.

10. Vorrichtung nach Anspruch 9, dadurch gekennzeichnet, dass sie Mittel (5) zum Auslesen der in dem Leerfeld enthaltenen Information umfasst, welche es ermöglichen, die Anzahl der Stationen des Netzes, die in einem Speicher (50) gespeichert ist, mit der Anzahl der von der Nachricht durchlaufenden Stationen zu vergleichen und dem Verarbeitungselement (20) der Station anzuzeigen, dass die Nachricht durch die Stationen, welche sich erkannt haben, richtig berücksichtigt wurde.

## Claims

1. Method for exchanging messages within a circular network between a transmitting station and several stations of the network to which a message contained within a frame is liable to be adressed, the method comprising:

the transmission by the transmitting station (EM) of a blank field (CV) not containing any information at the beginning and the modifications of at least one bit (C) denoting that all the stations addressed have duly copied the message or that at least one addressed station has not copied the message, characterised in that it also comprises the following stages:

modification of the information contained in this blank field (CV) upon passing through each station by incrementation within each station of a counter field (CPT) the capacity of which is in relationship with the number of stations of the network.

– modification or copying of at least one bit (A) denoting that at least one station has identified itself as having been addressed, or that none of the stations has identified itself as having been addressed,

– transmission of a field (FT) denoting the end of the frame preceding the blank field (CV),

– and modification or copying of a bit (E) of the field (FT) denoting the end of the frame in relationship with the validity of the frame.

2. Method according to claim 1, characterised in that the blank field corresponds to at least one octet of information.

3. Method according to claim 1 or 2, characterised in that it additionally comprises a stage for reading the modified information of the field CV and bit E of the field FT upon return to the transmitting station EM to verify that the message has been noted by all the stations and recorded by the stations concerned, and that no error has occurred in the transmission.

4. Method according to claim 3, characterised in that in the case in which the station EM records an error indicated by the content of the bits (A, C; CPT, E), it transmits a frame for cancellation of the preceding message to all stations.

5. Method according to claim 4, characterised in that the frame received correctly by the totality of the recipient stations is not validated except by passage of another frame or token over the network.

6. Method according to one of the preceding claims, characterised in that the bits (A) and (C) number two and that the stages for modification of these bits are doubled to allow security to be improved.

7. Method according to claim 1 or 4, characterised in that the bit (A) is unchanged when the received value already corresponds to the binary stage 1, and modified to 1 when the received value corresponds to the binary state 0 and the station has identified itself as having been addressed.

8. Method according to claim 1 or 4, characterised in that the bit (C) is kept in the binary state 0 if no station has been addressed or if an addressed station has not copied the information, and is modified to or kept at the binary value 1 when all the addressed stations have copied the message correctly.

9. Apparatus for application of the method according to one of the preceding claims, characterised in that each station comprises:

means (6) for transmitting a blank field CV;

means (7) for receiving and storing the information contained in a blank field and means for detecting the passage of the blank field;

means (20) for identifying the presence or absence of an addressing of the station and for making allowance for the information INFO;

means (8) for modifying the information carried by the blank field as a function of the result supplied by the means (20) for identifying an addressing;

means for modifying a bit (E) of the field denoting the end of the frame in relationship with the validity of the frame.

10. Apparatus according to claim 9, characterised in that it comprises means (5) for reading the information contained in the blank field, allowing the number of stations of the network recorded in a memory (50) to be compared with the number of stations traversed by the message and for indicating to the processing unit (20) of the station that the message has been correctly evaluated by the stations which have identified themselves.

EP 0 190 951 B1

# FIG.1

# FIG 2

FIG. 3

21

T1

T1 + a

e

T2 + e

T2 + e + b | Ǝ | IR | VER | c de F

EP 0 190 951 B1

FIG. 5

FIG. 6

FIG.7

FIG. 8